# EUROPEAN PATENT APPLICATION

(11) **EP 4 603 783 A1**
(43) Date of publication of application: **20.08.2025**
(21) Application number: 25154924.2
(22) Date of filing: 30.01.2025
(51) Int. Cl.: F41H 11/00, F41G 3/14, G01S 3/808, G01S 5/22, G01S 5/30

(54) **METHOD AND DEVICE FOR LOCATING A FIREARM**

(30) Priority: 15.02.2024 IT 202400003181
(71) Applicant: Kayser Italia S.r.l., 57128 Livorno (LI) (IT); Zolesi, Paolo, 23823 Colico (LC) (IT); Zolesi, David Stefano, 57128 Livorno (LI) (IT)
(72) Inventor: Zolesi, Paolo, 23823 Colico (LC) (IT)
(74) Representative: Lunati & Mazzoni S.r.L.

(57) **Abstract**

A method (100) is provided for detecting a firearm (10) equipped with a laser-emitting emitter; the method (100) comprises a laser detector (2); three microphones (3) configured to detect a sound; a clock; a signaler (4) configured to indicate the firing position of said firearm (10); and a board determining the firing position of the firearm (10) based on the laser of the emitter detected by the detector (2) and the detection and timing of the sonic boom and muzzle blast detected by each of the microphones (3).

## Description

The present invention relates to a method and a device for locating a firearm of the type specified in the preamble of the first claim.

The present invention concerns a device and, appropriately, a method for locating a firearm and specifically a sniper.

Previous weapon detection devices (as used in this application, the term "device" refers to a combination, in one embodiment, of hardware, software, and/or firmware cooperating to perform one or more applications or functions) purely utilized either solely or substantially singular acoustic detection devices or techniques, or purely or substantially singular optical detection devices and/or techniques to locate the source of hostile gunfire.

Acoustic detection devices determine the direction and/or position of hostile gunfire by measuring and/or calculating the various times of arrival of the "sound" generated by hostile fire using a plurality of generally equidistant microphones and positioned or forming a microphone array.

Optical detection devices establish the position and/or direction of hostile gunfire by observing and/or detecting the position of a weapon muzzle flash.

The known technique described has some significant drawbacks.

In particular, acoustic devices are characterized by generally omnidirectional detection and, therefore, moderate accuracy. Optical devices, especially at long distances, also have relatively low accuracy but have the advantage of alerting the soldier before the enemy fires.

Furthermore, both devices are characterized by relatively high levels of false alarms. It is also noted that snipers are increasingly encountered in relatively densely populated areas where false alarms are particularly pronounced.

Another drawback is that known devices, whether acoustic or optical, are particularly bulky and thus difficult to wear.

An additional drawback is that they are particularly complex to manage and manufacture, resulting in increased usage difficulties and costs.

In this context, the technical task underlying the present invention is to design a method and a device for locating a firearm capable of substantially overcoming at least part of the mentioned drawbacks.

Within this technical task, an important object of the invention is to achieve a method and a device for locating a firearm that are particularly precise and not substantially subject to false alarms.

Another important object of the invention is to implement a device that is easy to wear.

A further important object of the invention is to achieve a method and a device for locating a firearm that are simple to manage and manufacture, thus having reduced usage difficulties and costs.

The technical task and the specified objects are achieved by a firearm locating device as claimed in the attached claim 1.

The characteristics and advantages of the invention are further clarified by the detailed description of preferred embodiments of the invention, with reference to the accompanying drawings, wherein:
**Fig. 1** shows a firearm locating device according to the invention;
**Fig. 2** illustrates the locating device at a second moment;
**Fig. 3** presents the locating device at a third moment of use;
**Fig. 4** exhibits the device at a fourth moment of use;
**Fig. 5** exposes a firearm locating method according to the invention; and
**Fig. 6** depicts a schematic representation of the shot and the trajectories of the bullet and sounds produced by the shot.

In this document, the measurements, values, shapes, and geometric references (such as perpendicularity and parallelism), when associated with words like "about" or other similar terms such as "approximately" or "substantially", should be understood as allowing for measurement errors or inaccuracies due to production and/or manufacturing errors and, especially, minor deviations from the value, size, shape, or geometric reference with which they are associated. For example, such terms, when associated with a value, preferably indicate a deviation not exceeding 10% of the value itself.

Moreover, terms such as "first", "second", "upper", "lower", "main", and "secondary" when used do not necessarily identify an order, priority of relation, or relative position but may simply be used to more clearly distinguish different components from one another.

Unless otherwise indicated, "perpendicular", "transversal", "parallel", or "normal" or other geometric positioning terms between geometric elements (e.g., axes, directions, and lines) are to be understood in reference to their mutual geometric position between corresponding projections. These projections are defined on a single plane parallel to the plane(s) of placement of said geometric elements. Unless otherwise indicated, the measurements and data reported in this text are to be considered as performed in International Standard Atmosphere ICAO (ISO 2533:1965).

Unless otherwise specified, as highlighted by the following discussions it is considered that terms such as "treatment", "computing", "determination", "computation", or similar refer to actions and/or processes of a computer or similar electronic computation device that manipulates and/or transforms data represented as physical quantities, such as electronic magnitudes of records of a computing system and/or memories, into other data similarly represented as physical quantities within computer systems, records, or other information storage, transmission, or display devices.

With reference to the Figures, the firearm locating device according to the invention is globally indicated by the number **1.**

In particular, it is configured to detect a sniper and specifically a firearm **10** (such as a high-powered and/or precision rifle) equipped with a laser emitter and thus to indicate and signal its firing position (in this document, the term "position" preferably refers to a geolocation and may, for example, include geographical coordinates) with respect to the device 1 itself and particularly with reference to a user **1a** wearing at least part of said device 1. The device 1 is thus configured to alert the user 1a of a firearm 10 aimed at him.

It is noted that in this document the term "emitter" identifies any apparatus, preferably attached to the firearm, configured to emit a laser facilitating the aiming and/or targeting of a target and, in this case, the user 1a.

The emitter can be configured to emit a distance-measuring laser between the sniper and the target (identifiable in the user 1a), usually emitting in the IR spectrum range between 900 nm and 1500 nm. It can therefore be a known rangefinder, that is, a tool capable of measuring the distance existing between the rangefinder itself, i.e., the firearm, and the user.

Alternatively or additionally, the emitter is configured to emit an aiming laser facilitating the aiming of the weapon 10 towards the user, extending along said aiming axis 10a and appropriately emitted in the visible spectrum.

In summary, it can thus be both a laser rangefinder and an aiming device. Therefore, the laser can be for distance measurement or aiming purposes. Hereinafter, it will simply be referred to as a laser.

Preferably, the emitter is a rangefinder, and the laser is for distance measurement. The laser and therefore the emitter define an aiming axis **10a.**

The laser usually has a circular cross-section.

The locating device 1 comprises at least one detector **2** defining a sensitive surface **2a** configured to detect the laser.

The sensitive surface 2a identifies a surface configured to detect a laser beam incident upon the same surface 2a. It can therefore be a photosensitive surface responsive to said laser.

The sensitive surface 2a is configured to determine the position along the same sensitive surface 2a.

In particular, the sensitive surface 2a and thus the detector 2 are configured to detect the shape of the portion of the surface 2a struck by the laser and, therefore, the shape of the laser cross-section incident on the same surface 2a.

The sensitive surface 2a can be flat. Alternatively, it may have a curved profile or a spherical portion.

Appropriately, it comprises multiple detectors 2 defining sensitive surfaces 2a, preferably at least partially not aligned in the same plane (i.e., along a plane) so as to be struck by lasers coming from different directions and/or firing positions. Appropriately, the sensitive surfaces 2a are arranged so as to define a closed surface. It should be noted that the expression "closed surface" identifies the fact that the detectors 2 are arranged so that, except for small mutual distances (due, for example, to technical or assembly reasons), the sensitive surfaces 2a, when intersected by a plane transverse to them, define a closed, broken, and/or circular line. The sensitive surfaces 2a can thus identify the lateral surfaces of, for example, a solid of revolution or a polygonal solid.

The detector 2 can be wearable. In this document, the term "wearable" identifies the fact that it is bound to a garment (for example, a vest, a backpack, or a helmet) of the user.

The locating device 1 comprises one or more microphones **3** configured to detect a sound.

Specifically, it comprises multiple microphones 3 and, more precisely, at least three, preferably four, microphones 3.

Preferably, these microphones are spaced apart by at least 80 mm.

Each microphone 3 can include any sensor configured to detect a sound. Preferably, it can be an omnidirectional microphone and, therefore, configured to detect the arrival of acoustic phenomena, suitably connected to the shot, such as preferably the sonic boom (shock wave) and/or muzzle blast.

The muzzle blast is caused by sound waves traveling at the speed of sound, resulting from the detonation and produced by the rapid expansion of gases exiting the muzzle of the firearm 10. These are spherical waves.

The sonic boom is caused by the supersonic propagation of the projectile **10a** and thus advances at the speed of the projectile 10a. It is generated by the travel of the projectile 10a as it surpasses the speed of sound, and the wave it generates is transverse to the projectile 10a forward travel direction. Consequently, the supersonic wave generated by it has a direction normal to the external surface of the projectile 10a ogive/cone, that is, the front part of the projectile 10a.

The muzzle blast travels at the speed of sound, while the sonic boom moves at a supersonic speed equal to the speed of the projectile 10a. Therefore, the sonic boom, even though generated later, arrives first because the projectile 10a travels at supersonic speed, which is higher than the speed of sound and thus of the muzzle blast.

Each microphone 3 can be static and thus include a support, such as a tripod, for resting on a surface; alternatively, the system 3 can be mobile and therefore include a movement component, such as a robot.

One or more microphones 3 can be wearable. Specifically, they can be placed at distant points on the same garment or on different garments. Alternatively, they may be non-wearable and, for example, placed on the ground as shown in the figures. The locating device 1 comprises a clock (not shown in the figure for simplicity) configured to measure the time going by.

The clock can be wearable.

The locating device 1 comprises a signaler **4** configured to indicate the firing position of the firearm 10 and, consequently, the sniper.

The signaler 4 is configured to emit a warning signal indicating the firing position. The signaler 4 can be either wearable or non-wearable.

This warning signal can be optical. In this case, the signaler 4 may include a light emitter placed on the ground and/or a head-mounted display (HMD) integrated, for example, into a helmet.

Alternatively or additionally, the warning signal can be acoustic. In this case, the signaler 4 may include a speaker placed on the ground and/or an earpiece.

The locating device 1 comprises an electronic board (not shown in the figure for simplicity) in data connection with at least one detector 2, one or more microphones 3, the signaler 4, and, optionally, the clock.

The board can be identified as a processor or any other electronic device configured to control and at least partially execute the firearm locating method described below. The board can be wearable.

The board can include the speed of sound.

The board can include at least one projectile speed 10a. Specifically, the locating device 1, and more precisely the board, may include just one projectile speed 10a or, in particular, multiple projectile speeds 10a, each of them associated with a firearm 10.

The "speed of sound" and the "projectile speed", as referred to the board, should be identified data/values indicating the actual speed of sound, stored on the board and, therefore, can be, for example, processed and/or transformed by the said board as described below.

The locating device 1 may include a shot database.

The shot database includes one or more firearms 10, each associated with a projectile speed 10a. Optionally, the shot database includes one or more firearms 10, each associated with one or more calibers, in turn, associated with a projectile speed 10a.

It is noted that the projectile speed can be a known value determined a priori, for example, measured. For instance, the projectile speed can be identified as the muzzle velocity (i.e., the velocity at the muzzle is a term of internal ballistics that refers to the speed at which the projectile exits the muzzle), which, for example, in the case of the M40 rifle, is 777 m/s (for the .308 Winchester caliber) or 820 m/s (for the 6.5 x 47 mm Lapua caliber); for the M200 CheyTac Intervention, it is 1100 m/s; for the Barrett M95, it is 850 m/s (.50 BMG), and 920 m/s (.416 BRT). In the case of the locating device 1 and specifically the board comprising only one projectile speed, this speed can be the projectile speed value of a suitably selected firearm 10, or the projectile speed value can be defined as a single value given by the average speed of projectiles 10, obtainable, for example, as the average speed of projectiles fired by different and preselected firearms 10. Alternatively, in the case of the shot database, there are multiple speeds, i.e., multiple values, for projectiles from different firearms 10.

Alternatively or additionally, the shot database includes one or more firearms 10, each associated with a sonic boom and a muzzle blast of said firearm 10. Optionally, the shot database includes one or more firearms 10, each associated with one or more calibers, in turn, associated with a sonic boom and a muzzle blast. Preferably, the shot database includes one or more firearms 10, each of which is associated with: a projectile speed 10a, a sonic boom, and a muzzle blast of said firearm 10. Optionally, the shot database includes one or more firearms 10, each associated with one or more calibers, which in turn are associated with a projectile speed 10a, a sonic boom, and a muzzle blast of said firearm 10.

The locating device 1 may include a signal database.

The signal database is configured to assign to each detector 2 a matrix that associates each pixel of the sensitive surface 2a with one or more coordinates, allowing the board to identify which is the portion of the sensitive surface 2a struck by the laser on the sensitive surface and preferably the shape of said struck portion. The signal database may also be configured to assign to each detector also the position of the detector 2 itself.

The locating device 1 may include a sensor database.

The sensor database can associate each detector 2 with a detection position.

The sensor database can associate each microphone 3 with a measurement position, i.e. the position of each microphone 3 is either relatively (i.e., with respect to the other microphones 3) or preferably absolutely defined. This measurement position allows, as described herein below, the correlation of the measurement of each microphone position with the time difference in how detected sounds reach the various microphones 3, and thus enabling the calculation of the direction and distance of the shot origin.

It should be noted that, even if not explicitly described, it is evident to a skilled expert in the art that each microphone 3 and detector 2 includes its own identifier, thus allowing the board to understand to which of these components corresponds the detected data and/or its position in the aforementioned databases.

The locating device 1 may include a geolocator 5 configured to geolocate at least one of either the device 1 or the user. Specifically, if the geolocator 5 is wearable, the geolocator 5 is configured to geolocate only the user. More specifically, if the device 1 is wearable, the geolocator 5 is configured to geolocate both the user and the device 1.

The geolocator 5 is in data connection with the board, which can thus detect the current position of the geolocator 5 with respect to one or more microphones 3 and/or one or more detectors 2.

The locating device 1 may include environmental sensors 6 configured to acquire one or more environmental data. Environmental data can suitably identify information related to the environment in which the user is located, such as temperature and atmospheric pressure. These environmental sensors 6 may be wearable.

Specifically, the environmental sensors 6 may be configured to acquire ambient temperature and can thus include a thermometer.

In particular, the environmental sensors 6 may be configured to acquire atmospheric pressure and can thus include a barometer.

The locating device 1 may include an interface **7** configured to allow interaction between the user and the device 1 and, in particular, between the user and the board. Preferably, the interface is wearable.

The interface 7 can be an output interface, thus allowing the board to send the user a signal, specifically the firing position of the firearm 10. For example, it may include a screen/projector integrated into a helmet visor.

In this case, the interface 7 may include the signaler 4.

Additionally, the interface 7 can also be an input interface and thus allow the user to control the device 1.

The locating device 1 may include at least one power supply configured to power one or more and, specifically, all of said at least one detector 2, said one or more microphones 3, said signaler 4, said clock, said board, said geolocator 5, and said interface 7.

The power supply may include a photovoltaic panel, preferably wearable.

The operation of the firearm locating device 1, previously described in structural terms, defines a new firearm locating method **100.** As described above, the device 1 thus includes the means to implement the method 100.

The locating method 100 is configured to detect and subsequently signal the firing position of a sniper and, more precisely, of a firearm 10 suitably equipped with an emitter, with respect to the device 1 itself and specifically with respect to a user 1a wearing at least part of said device 1. The locating method 100 is therefore designed to alert the user 1a of a firearm 10 aimed at him/her.

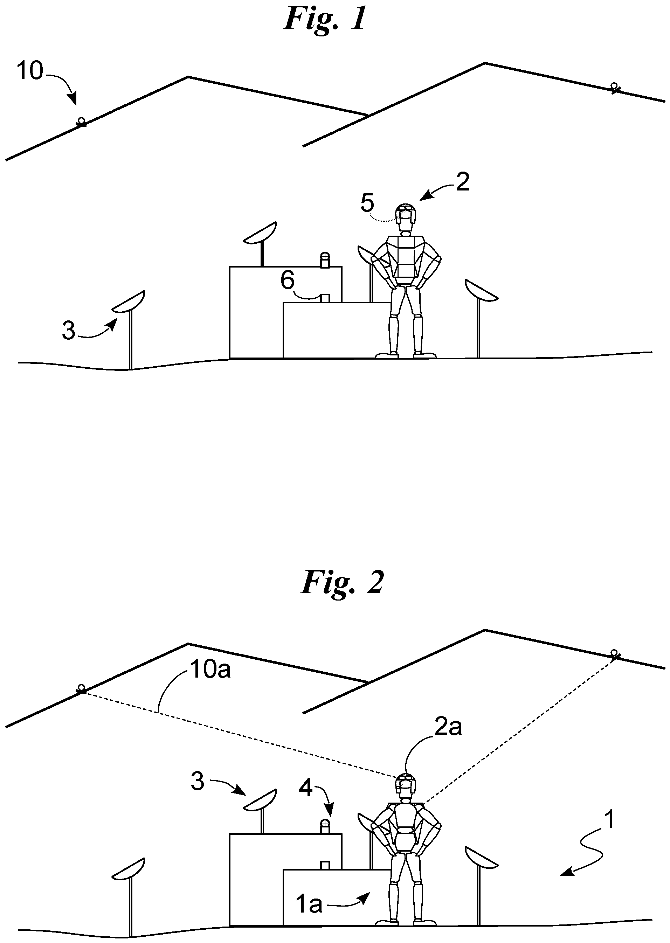

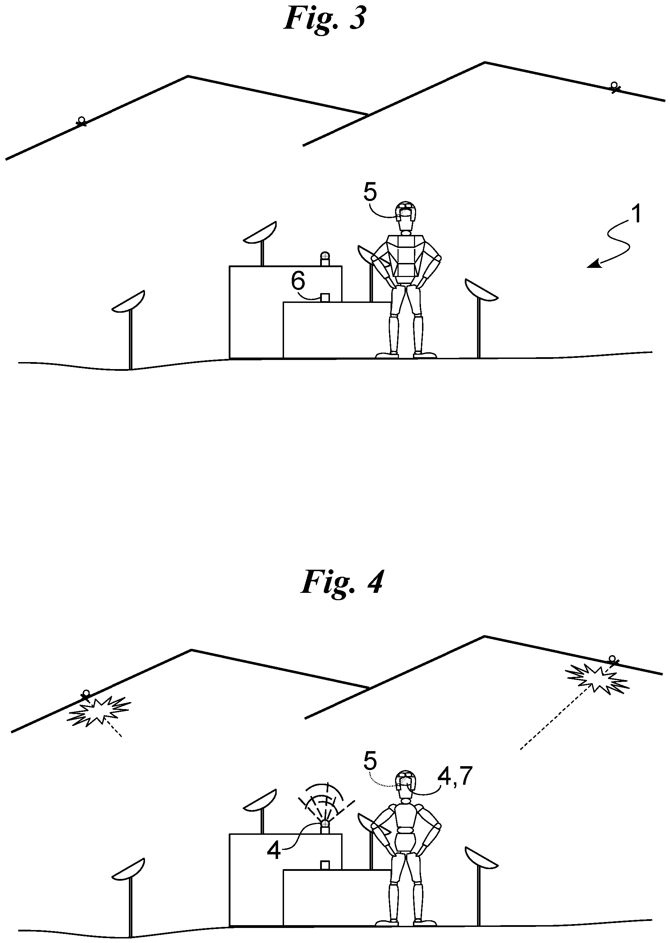

The locating method 100 includes an observation step **110** (illustrated in Figs. 1-2) and a detection step **120** (illustrated in Fig. 3).

In the observation step 110, at least one detector 2, and specifically the sensitive surface 2a, is active and thus adapted to detect the laser emitted by the emitter. Preferably, during the observation step 110, one or more microphones 3 may be deactivated.

In the observation step 110, a sensitive surface 2a detects the laser from the emitter. Specifically, the sniper, by moving the emitter 10, while trying to aim, may cause the laser to strike the sensitive surface 2a, allowing the detector 2 to detect him/her and subsequently send a first signal to the board. Notably, thanks to the signal database it is possible to determine the position and preferably the shape of the portion of the sensitive surface 2a struck by the laser. More precisely, when multiple detectors are present, the position of the detector 2 struck by the laser is identified.

Specifically, during the observation step 110, the detector 2 whose sensitive surface 2a is struck by the laser sends the board a first signal proportional to the shape and appropriately to the extent of the portion of the sensitive surface 2a struck by the laser. It is noted that the portion of the sensitive surface 2a struck by the laser varies according to the inclination between the sensitive surface 2a and the aiming axis 10a. In detail, if the axis 10a is perpendicular to the surface 2a, the shape of the struck portion of the sensitive surface 2a matches shape of the laser cross-section, whereas if the aiming axis 10a is oblique/inclined with respect to the sensitive surface 2a, the shape of the struck portion of the sensitive surface 2a depends on the laser cross-section and the inclination between axis 10a and sensitive surface 2a.

Said first signal may thus include the position along the sensitive surface 2a and appropriately the shape of the portion of the sensitive surface 2a struck by the laser. Additionally, in the case of multiple detectors 2, the first signal may include an identifier, specifically indicating the position of the detector 2 struck by the laser. The observation step 110 can be carried out continuously until the laser emitted by the emitter is detected.

Upon detection of the laser, that is, upon sending the first signal to the board, the observation step 110 ends, and thus the detection step 120 begins.

Optionally, the observation step 110 may end with the emission of a pre-alarm to the user 1a, appropriately commanded by the board through the signaler 4.

In the detection step 120, one or more microphones 3 are active, and appropriately, the at least one detector 2 is deactivated. Specifically, in step 110 precisely at the end of it, the board commands the activation of one or more microphones 3, initiating the detection step 120 and appropriately deactivating the at least one detector 2, which then remains inactive during the detection step 120.

The detection step 120 can be carried out continuously for a limited period of time, for example, not exceeding one hour. If, within this time limit (obviously measured by the clock), no sonic boom and/or muzzle blast is detected, the detection step 120 ends, and a new observation step 110 begins, and then the board commands the activation of the at least one detector 2 and appropriately the deactivation of one or more microphones 3.

If during the detection step 120 the sniper fires, the firearm emits first a sonic boom and then a muzzle blast, both of which are detected by each microphone 3. It is specified that, in the case of multiple microphones 3, each will detect the sonic boom and subsequently the muzzle blast depending on the distance of the respective microphone 3 from the firearm 10. Consequently, each microphone 3 registers a first detection of a sonic boom and a second detection of a muzzle blast. These detections are sent to the board.

It should be noted that during the detection step 120, the one or more microphones 3 may detect multiple sounds, which are transmitted to the board and by it compared with the sounds stored in the shot database. Therefore, only the sounds detected by one or more microphones 3 that are substantially identical to those stored and appropriately associated with a specific firearm 10 are identified as the sonic boom (i.e., the first detection) and the muzzle blast (i.e., the second detection). Simultaneously with the detection of the sonic boom and the muzzle blast and therefore of the first and second detection, the clock records for each first detection a first time and for each second detection a second time.

These times are sent to the board.

In summary, when a shot is fired, each microphone 3 records a first detection associated with a first time and a second detection associated with a second time; this information is then transmitted to the board.

Optionally, during the detection step 120, the environmental sensors 6 may acquire one or more environmental data and in particular ambient temperature and/or atmospheric pressure.

At this point, the detection step 120 ends.

The method 100 may then include a processing step **130** during which the board determines the firing position i.e. the firearm 10 position, and thus the sniper, position based on one or more data acquired during the steps 110 and/or 120. The firing position can be either absolute or relative. The absolute position can be referenced to a predefined reference system, and for example, with respect to the position of one of the microphones 3. The relative firing position is to be understood as referred to the geolocator 5 and, in particular, to the user 1a.

Preferably, in step 130, the board determines the position of the firearm 10 based on each first time, each second time, the projectile speed 10a, and the measurement position of one or more microphones 3. Additionally, this determination of the firearm 10 position can also be based on one or more of the speed of sound, the first signal, the first detection, and the second detection, as further described below. Specifically, in the processing step 130 (Fig. 3), the board determines the absolute firing position of the firearm 10 according to the one or more data acquired in steps 110 and/or 120. The geolocator 5 detects the current position (i.e., the position of the user 1a in the case of a wearable geolocator 5) and sends this data to the board; and based on the absolute firing position and the current position, the board determines the relative firing position.

It should be noted that the absolute firing position may subsequently be referred to simply as the "firing position", that is omitting the term "absolute", while the "relative firing position" will always be explicitly indicated as such.

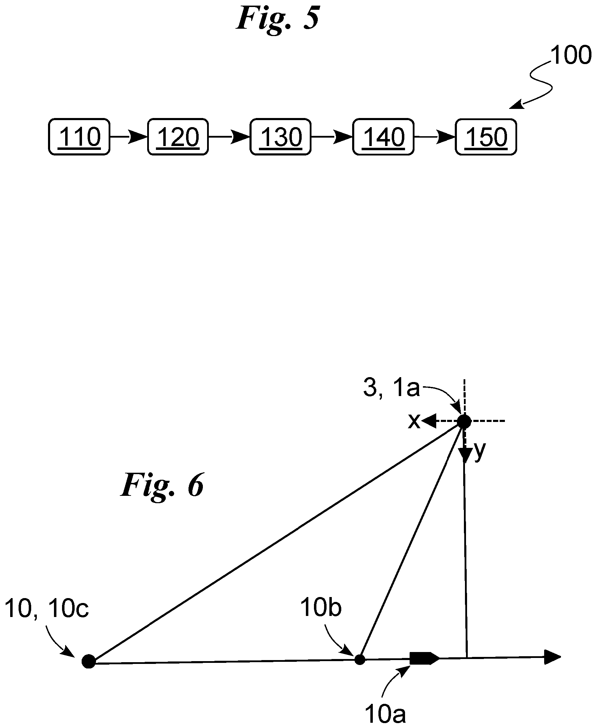

In detail, the board determines the absolute firing position of the firearm 10 based on the projectile speed, the speed of sound, the first detection time of each first detection, each second time of each second detection, and preferably the position of each microphone 3. Specifically, the board defines the absolute firing position according to a correlation matrix, preferably three-dimensional, between the first and second times acquired by all microphones 3, appropriately the positions of the various microphones 3 (appropriately known from the sensor database), and preferably the firing speed. Actually the correlation between the first times and second times of the microphones 3 allows determining the time delays in detecting the sonic boom and the muzzle blast among the various microphones 3; therefore these acquisition delays, appropriately related to the projectile speed 10a and the positions of the microphones 3, enable the determination of the angles and directions of arrival of each sonic boom and muzzle blast; based on this, the distance appropriately along a normal to the trajectory of the projectile 10a and to the microphones 3, to the shot trajectory of each microphone 3 and in the end the relative shot position. In Fig. 6, a schematic representation of the projectile 10a trajectories of the point **10b** of the muzzle blast, and the point **10c** of the sonic boom with respect to a reference system (x, y) centered on a microphone 3, and optionally the user 1a if wearing said microphone 3, is illustrated.

Optionally, the board may also determine the absolute firing position of the firearm 10 based on the first signal. Specifically, according to this first signal (position and shape of the portion of the sensitive surface 2a struck by the laser and additionally the position of the struck detector 2), the board can define a search area for the position of the firearm 10. More precisely, the board can define the laser axis, and thus making the search area a cone with said laser axis as its axis, the vertex at the portion struck by the laser on the surface 2a, with a predefined angular width (for example, approximately between 60° and 120°, and specifically around 90°).

It should be noted that the projectile speed 10a may be predefined.

Alternatively, it can be determined by the board.

Specifically, the board may search the shot database for the projectile speed 10a associated with the first detection (sonic boom) and/or the second detection (muzzle blast). The board identifies in the shot database the firearm 10 associated (or at least with minimal differences) with one or more first and/or second detections by at least one microphone 3 and thus determines the projectile speed 10a associated with said firearm 10.

Alternatively or additionally, the board 3 can determine the absolute position of the firearm 10 also based on at least one environmental parameter and, specifically ambient temperature and/or atmospheric pressure (acquired by the environmental sensors 6 during the detection step 120). In particular, ambient temperature and/or atmospheric pressure, in a known manner to a skilled expert in the art, can affect and consequently alter the speed of sound and/or of the projectile 10a, thus influencing the calculation of said position.

Once the calculation of the absolute firing position of the firearm 10 ends, the geolocator 5 detects the current position of the geolocator and preferably that of the user 1a, and sends this data to the board and then the board determines the relative firing position (i.e., the position of the firearm 10 with respect to the geolocator 5) based on the absolute firing position and the current position.

The method 100 may then include a sending step **140,** wherein the board sends the signaler said position signal corresponding to said firing position (absolute or preferably relative), and a signaling step **150** (Fig. 4), wherein the signaler 4 indicates the position of the firearm 10 and thus of the sniper based on the position signal.

Preferably, the steps 130, 140, and 150 can be repeated (appropriately continuously or at predefined time intervals). Steps 140, 150, and 130 can end following a signal from the user, for example, via the interface 7.

Additionally, the invention allows for the development of a specific computer program. This program includes instructions that, when the program is executed by the computer, enable the computer to perform the method 100 as previously described.

The invention also allows for the implementation of a specific storage medium. This medium is preferably computer-readable and includes instructions that, when executed by the computer, enable the computer to perform a method as previously described.

Furthermore, according to one embodiment, the proposed technique is implemented using software and/or hardware modules. In this document, the term "module" refers to a software and/or hardware component or a combination of hardware and software components.

A software component identifies at least one computer program, one or more subprograms, or program libraries and generally any program element or piece of software capable of implementing one or more functions as described in the present document. The software module is executed by a data processor of a physical entity (terminal, server, gateway, router, etc.) and can access the hardware resources of that physical entity (memory, storage media, communication buses, input/output electronic boards, user interfaces, etc.).

A hardware component, such as the aforementioned processor, refers to any hardware element or assembly capable of implementing one function or more functions as described herein below for the component in question. It may be a programmable hardware component or a component with an integrated processor for software execution, such as, for example, an integrated circuit, a smart card, a memory card, or an electronic board for firmware execution, etc.

Each component of the system described herein above can, of course, implement its own software components, i.e. the various embodiments mentioned above can be combined with one another to implement the proposed technique.

The device 1 and the method 100 for locating a firearm 10 according to the invention achieve significant advantages.

Indeed, unlike known devices, the device 1 and the method 100 allow for extremely precise localization of a firearm 10. Consequently, it accurately and quickly locates the sniper, enabling the user-especially in the case of relative firing position-to swiftly take cover and therefore respond precisely and rapidly to the sniper.

This aspect is enhanced by the specific sequential use of the aforementioned detectors 2 and microphones 3. In fact, integrating the detection of the laser direction with the subsequent sonic boom and muzzle blast captured by three microphones 3 positioned in different locations ensures exceptional precision in determining the firing position and, consequently, the sniper's location. This aspect also allows for precise localization of the sniper even with respect to the user, even if the user, for example, moves to take cover.

Another advantage comes from the use of the first signal, which, by defining a limited search area for the firearm 10 position, allows to accelerate the calculation of the position of the firearm 10.

Another advantage is due to the fact that the device 1 features wearable components makes it practical to carry and does not hinder the user's movements. A further advantage is represented by the fact that the device 1 and the method 100 are characterized by an almost total absence of false alarms, thanks to the detection of both the sonic boom and the muzzle blast, and thus the shot database.

The invention is subject to variations falling within the scope of the inventive concept defined by the claims.

For example, the locating device 1 may also include an inertial platform configured to detect the orientation of the user 1a and preferably their position and thus the movements of the user 1a. It should then be noted that, in some cases, the inertial platform and the geolocator 5 may coincide and thus be identified by said inertial platform.

The orientation of user 1a identifies the direction and whereto the user is looking, appropriately referred to a relative reference system (for example, the very user) and/or an absolute reference system (for example, relative to magnetic north). The inertial platform can be identified in one or more sensors, preferably inertial, appropriately configured to allow to define a reference system (e.g., Cartesian) to which the orientation of the user 1a can be referred. It allows determining the user orientation (e.g., the direction and orientation of the user's gaze) appropriately with reference to a relative reference system (e.g., the user) and/or an absolute system (e.g., with respect to magnetic north). It may include a compass and three accelerometers. Specifically, the inertial platform is of a known type (e.g., a known inertial navigation system or inertial guidance system) and therefore is not described further.

The inertial platform can be wearable. For example, it can be bound to a garment. In this case, during the processing step 130, after calculating the absolute firing position of the firearm 10, the inertial platform detects the current position and orientation of the user 1a and sends these two data to the board and the board then determines the relative firing position (i.e., the position of the firearm 10 with respect to the geolocator 5) based on the absolute firing position and the user's current position, preferably including the user's orientation with respect to the absolute firing position.

Within this context, all details can be replaced by equivalent elements, and materials, shapes, and dimensions may be of any type.

## Claims

1. Method (100) for detecting a firearm (10) equipped with a laser emitter;
said method (100) being **characterized by** comprising
- at least one detector (2) defining a sensitive surface (2a) configured to detect said laser;
- at least three microphones (3) configured to detect a sound;
- a clock;
- a signaler (4) configured to indicate the firing position of a projectile (10a) from said firearm (10);
- a board in data connection with said detector (2), said microphones (3), and said signaler (4);
**characterised in that**
- said board comprises
∘ a speed of said projectile (10a); and
∘ a sensor database associating each of said microphones (3) with a measurement position; and
**in that** it comprises, in sequence:
- an observation step (110) wherein said sensitive surface (2a) detects said laser from said emitter;
- a detection step (120) wherein said microphones (3) are active and, upon the firing of said firearm (10), each of said microphones (3) performs a first detection of a sonic boom and a second detection of a muzzle blast, and wherein said clock defines for each first detection a first time and for each second detection a second time;
- a processing step (130) wherein said board determines the firing position of said firearm (10) based on the measurement position of said three microphones (3), said projectile speed (10a), of each of said first time, and each of said second time.

2. Method (100) according to claim 1, wherein said board comprises a speed of sound; and wherein in said processing step (130) said board also determines said firing position of said firearm (10) also based on said speed of sound.

3. Method (100) according to at least one of the preceding claims, further comprising environmental sensors (6) configured to acquire ambient temperature; and wherein in said processing step (130) said board also determines said firing position of said firearm (10) also based on said ambient temperature.

4. Method (100) according to at least one of the preceding claims, further comprising environmental sensors (6) configured to acquire atmospheric pressure; and wherein in said processing step (130) said board also determines said firing position of said firearm (10) based on said atmospheric pressure.

5. Method (100) according to at least one of the preceding claims, wherein in said processing step (130) said board defines the absolute firing position based on a three-dimensional correlation matrix of said measurement position of said three microphones (3), said projectile speed (10a), said first times, and said second times acquired by said three microphones (3).

6. Method (100) according to at least one of the preceding claims, further comprising a sending step (140) in which said board sends to said signaler (4) a position signal corresponding to said firing position; and a signaling step (150) in which said signaler (4) indicates the firing position of said firearm (10) based on said position signal.

7. Method (100) according to at least one of the preceding claims, wherein in said observation step (110) said microphones (3) are inactive; wherein in said detection step (120) said at least one detector (2) is inactive; and wherein when, in said observation step (110), said sensitive surface (2a) detects said laser from said emitter and from said at least one detector (2); said observation step (110) ends and said detection step (120) starts.

8. Method (100) according to at least one of the preceding claims, comprising an inertial platform configured to be bound to a user (1a) and to detect the orientation of said user (1a); and wherein, in said processing step (130), said board determines said firing position with respect to said orientation of said user (1a).

9. Device (1) for detecting a firearm (10) equipped with a laser emitter; said device (100) being **characterized by** comprising
- at least one detector (2) defining a sensitive surface (2a) configured to detect said laser;
- at least three microphones (3) configured to detect a sound;
- a clock;
- a signaler (4) configured to indicate the firing position of said firearm (10);
- a board in data connection with said detector (2), said microphones (3), and said signaler (4);
**in that**
- said board comprises
∘ a speed of said projectile (10a); and
∘ a sensor database associating each of said microphones (3) with a measurement position;
and **in that** said board, when said sensitive surface (2a) detects said laser, commands the activation of said microphones (3); subsequently
- when each of said three microphones (3) performs a first detection of a sonic boom and a second detection of a muzzle blast, said clock records a first time for each first detection and a second time for each second detection; and finally,
- said board determines the firing position of said firearm (10) based on the measurement position of said three microphones (3), said projectile speed (10a), each of said first times, and each of said second times.

10. Device (1) according to the preceding claim, further comprising an inertial platform configured to be bound to a user (1a) and to detect the orientation of said user (1a), allowing said board to determine said firing position with respect to said orientation of said user (1a).
